# DEMANDE DE BREVET EUROPEEN

(11) **EP 1 070 937 A1**
(43) Date de publication de la demande: **24.01.2001**
(21) Numéro de dépôt: 00440212.9
(22) Date de dépôt: 17.07.2000
(51) Int. Cl.: G01C 21/20, B63C 11/02, G06G 1/00, G01C 17/10

(54) **Tablette d'orientation**

(30) Priorité: 23.07.1999 FR 9909699
(71) Demandeur: Mertz, Patrickated, 68600 Neuf-Brisach (FR)
(72) Inventeur: Mertz, Patrickated, 68600 Neuf-Brisach (FR)
(74) Mandataire: Nithardt, Roland

(57) **Abrégé**

La tablette d'orientation (1) comprend un support (2) présentant une zone triangulaire (2b) dont la pointe (2c) indique le cap suivi et renfermant un chronomètre (5), un plateau (3) monté tournant autour de son axe (10) sur ledit support (2), une boussole dont la partie fixe (4a) renfermant l'aiguille aimantée indiquant le nord (13) est fixée sur le support (2) et dont la partie mobile (4b) est fixée sur le plateau tournant (3). La tablette (1) est également équipée d'un crayon pour représenter sur le plateau tournant (3) à l'aide d'un quadrillage (8) imprimé sur le support (2) la trajectoire effectuée en fonction du temps écoulé et selon le cap suivi à partir d'un point de départ, de manière à retrouver le point de départ et à connaître le temps nécessaire pour rejoindre ledit point de départ.

## Description

La présente invention concerne une tablette d'orientation ayant une application aussi bien terrestre, aérienne que sous-marine et comprenant un support agencé pour indiquer le cap suivi, un plateau monté tournant autour de son axe sur ledit support, une boussole dont la partie fixe renfermant l'aiguille aimantée indiquant le nord est fixée sur le support, l'axe de la boussole étant confondu avec l'axe du plateau tournant, et des moyens de marquage.

Un dispositif d'orientation de ce genre est décrit dans le brevet US-A-3 983 630. Ce dispositif comporte un très grand nombre de pièces qui sont démontables puisqu'il est prévu d'y insérer une carte. Il est donc onéreux à fabriquer et risque de se démonter d'une manière inopinée lors de son utilisation, en particulier lors de plongées sous-marines. Il comprend de plus une plaque transparente montée de manière coulissante et comportant des lignes parallèles régulièrement espacées correspondant à une distance. L'utilisation de cette plaque coulissante peut s'avérer particulièrement difficile surtout en milieu aquatique. En particulier, lors de plongées sous-marines, les plongeurs peuvent être équipés de gants et vont alors éprouver des difficultés pour faire coulisser ladite plaque chaque fois qu'il est nécessaire de représenter une trajectoire, c'est-à-dire à chaque changement de direction.
Enfin, ce dispositif est basé sur une mesure de la distance parcourue. Il nécessite en conséquence l'utilisation soit d'une carte soit d'un appareil de mesure indépendant et donc encombrant à transporter.

Ce dispositif connu ne peut donc pas être utilisé dans le domaine de la plongée sous-marine. Or, dans ce domaine, il est intéressant de pouvoir retrouver à tout moment son point de départ avec une bonne précision. Le seul moyen actuel pour se repérer consiste, pour le plongeur, à remonter à la surface, repérer son bateau, replonger et à nager en se dirigeant à vue vers le bateau. Ces opérations doivent être répétées plusieurs fois avant que le plongeur puisse rejoindre son bateau et constituent des pertes de temps et d'énergie.

La présente invention vise à pallier ces inconvénients en proposant une tablette d'orientation économique à fabriquer et simple à utiliser et à transporter et qui permet à l'utilisateur de retrouver sans aucune difficulté son point de départ et de connaître le temps nécessaire à rejoindre ce dernier.

Dans ce but, l'invention concerne une tablette d'orientation du genre indiqué en préambule, caractérisée en ce la partie mobile de la boussole est fixée sur le plateau tournant, en ce que ladite tablette est pourvue d'un appareil de mesure du temps pour mesurer le temps écoulé pendant le trajet effectué selon le cap suivi, et en ce qu'un quadrillage dont chaque carreau correspond à une unité de temps est imprimé directement sur le support, de manière à représenter sur le plateau tournant, en fonction du temps écoulé, la trajectoire effectuée selon le cap suivi à partir d'un point de départ pour retrouver le point de départ et connaître le temps nécessaire pour rejoindre ledit point de départ.

D'une manière avantageuse, la tablette présente une zone dont la forme est agencée pour indiquer le cap suivi. Cette zone peut être de forme triangulaire, la pointe du triangle indiquant le cap suivi, et le quadrillage étant aligné avec ladite pointe.

D'une manière particulièrement avantageuse, l'appareil de mesure du temps est un chronomètre, ladite zone indiquant le cap comprenant un logement pour recevoir ledit chronomètre.

De préférence, le support comprend un bouton de blocage du plateau tournant.

D'une manière particulièrement avantageuse, le plateau tournant est réalisé dans un matériau transparent.

Les moyens de marquage sont constitués d'un crayon gras permettant d'écrire sur le plateau tournant. Le support peut comporter un logement pour le rangement de ce crayon.

La tablette d'orientation peut comprendre des moyens de fixation pour un lien d'accrochage.

La présente invention et ses avantages apparaîtront mieux dans la description suivante de deux exemples de réalisation, en référence aux dessins annexés, dans lesquels:
- la figure 1 représente une vue de dessus de la tablette d'orientation selon l'invention,
- la figure 2 est une vue de profil de la figure 1,
- les figures 3 à 6 représentent les différentes étapes d'utilisation de la tablette d'orientation en fonction d'un parcours effectué, et
- les figures 7 et 8 représentent respectivement en vue de face et de dessous une variante de réalisation de la tablette selon l'invention.

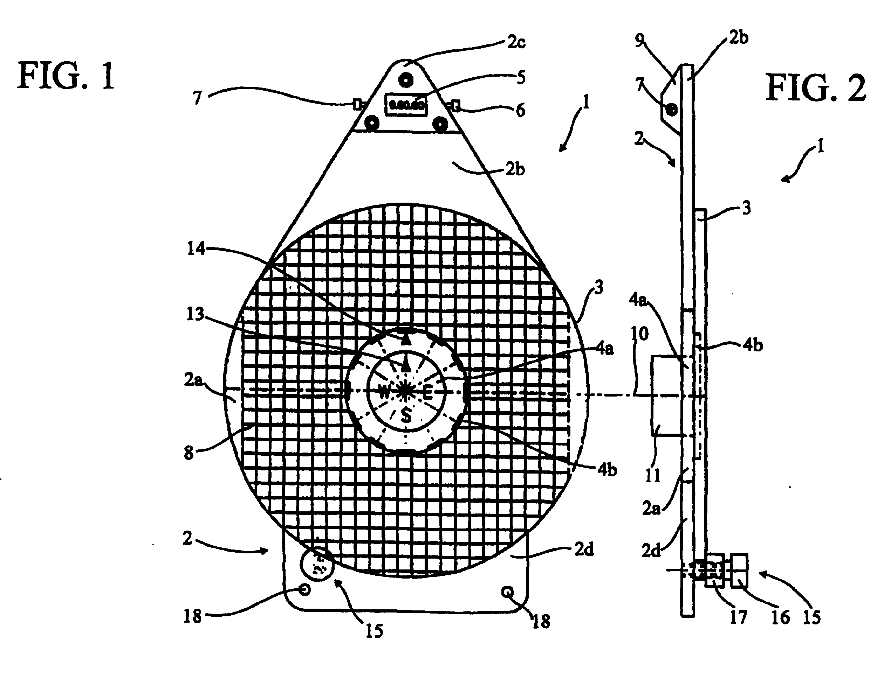

En référence aux figures 1 et 2, la tablette d'orientation 1 selon l'invention comprend un support 2, un plateau tournant 3 et une boussole constituée d'une partie fixe 4a et d'une partie mobile 4b.

Le support 2 présente une partie principale 2a rectangulaire prolongée à l'avant par une zone sensiblement rectangulaire 2d plus petite et à l'arrière par une zone de forme triangulaire 2b, la pointe 2c du triangle indiquant le cap suivi. Dans la pointe 2c de la zone triangulaire 2b se trouve un logement 9 pour recevoir un chronomètre 5 équipé d'un bouton de marche/arrêt 6 et d'un bouton de remise à zéro 7 d'une manière connue en soi. Le support 2 est réalisé en matière plastique transparente. Sur la partie principale 2a et sur une partie des zones rectangulaire 2d et triangulaire 2b est dessiné un quadrillage 8, les lignes du quadrillage 8 étant parallèles et perpendiculaires aux côtés de la partie principale rectangulaire 2a. Chaque carreau correspond à une unité de temps, par exemple un carreau correspond à 2 minutes.

Le plateau 3 est de forme circulaire et réalisé en matière plastique transparente. Il est fixé de manière tournante sur le support 2, son axe de rotation 10 étant placé sensiblement au centre de la partie principale rectangulaire 2a. Le diamètre du plateau tournant 3 est choisi de telle sorte que ce dernier recouvre toute la surface du quadrillage 8 dessiné sur le support 2. Également au centre de la partie principale rectangulaire 2a est prévu un logement 11 recevant la partie fixe 4a de la boussole, c'est-à-dire la partie qui renferme l'aiguille aimantée 13 indiquant le nord. Dans le plateau tournant 3 est prévu un logement pour recevoir la partie mobile 4b de la boussole, c'est-à-dire la couronne sur laquelle est inscrit le repère du nord 14. L'axe de la boussole, et donc l'axe de rotation de l'aiguille aimantée 13 et l'axe de rotation de la couronne 4b sont confondus avec l'axe de rotation 10 du plateau tournant 3.

Sur un côté de la zone rectangulaire 2d se trouve un bouton de blocage 15 agencé pour bloquer le plateau tournant 3. A cet effet, le bouton de blocage 15 comprend une vis 16 vissée dans le support 2 à proximité du plateau 3, et une rondelle 17 placée de manière à recouvrir une petite portion du bord du plateau 3. Ainsi, quand la vis 16 est vissée, l'extrémité du plateau 3 est pincée entre la rondelle 17 et le support 2. Quand la vis 16 est desserrée, la rondelle 17 n'appuie plus sur le plateau 3 qui peut librement tourner autour de son axe 10.

Le support 2 comprend également deux perforations 18 prévues pour y passer un lien d'accrochage (non représenté) permettant de passer la tablette d'orientation 1 autour du cou ou du poignet de son utilisateur.

Il est également prévu un crayon gras (non représenté) permettant d'écrire sur le plateau tournant 3.

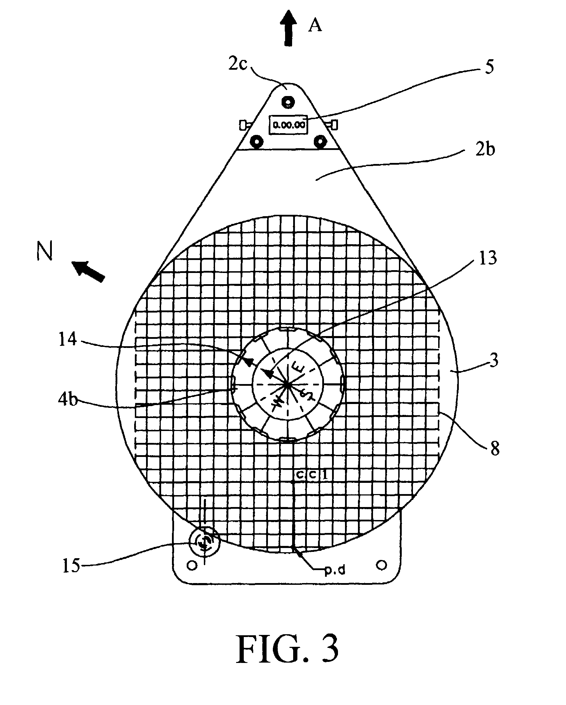

En référence tout d'abord à la figure 3, l'utilisation de la tablette d'orientation 1 selon l'invention est la suivante: l'utilisateur choisit sa première direction indiquée par la flèche A. Il tient la tablette d'orientation 1 devant lui à l'horizontale, le plateau tournant 3 au-dessus de sorte que la boussole et le chronomètre 5 soient visibles simultanément et opérationnels. L'utilisateur aligne la pointe 2c de la zone triangulaire 2b avec cette direction A. Il desserre ensuite le bouton de blocage 15 de manière à pouvoir tourner le plateau 3 et à aligner le repère du nord 14 de la couronne 4b avec l'aiguille indiquant le nord 13. Le bouton de blocage 15 est resserré. L'utilisateur trace alors sur le plateau 3 à l'aide du crayon son point de départ p.d en s'aidant du quadrillage 8. Le point de départ p.d est placé à l'intersection d'une ligne verticale et d'une ligne horizontale du quadrillage 8. L'utilisateur effectue alors son déplacement à vitesse constante suivant le cap A indiqué et chronomètre son déplacement à l'aide du chronomètre 5. Ensuite le chronomètre 5 est arrêté avant tout changement de direction. L'utilisateur trace alors sur le plateau 3 son déplacement en fonction de la durée du parcours en s'aidant du quadrillage 8, visible par transparence. Dans ce cas, 10 minutes de déplacement correspondent à 5 carreaux. Le point d'arrêt de la trajectoire correspond au premier changement de cap c.c 1, inscrit sur le plateau 3.

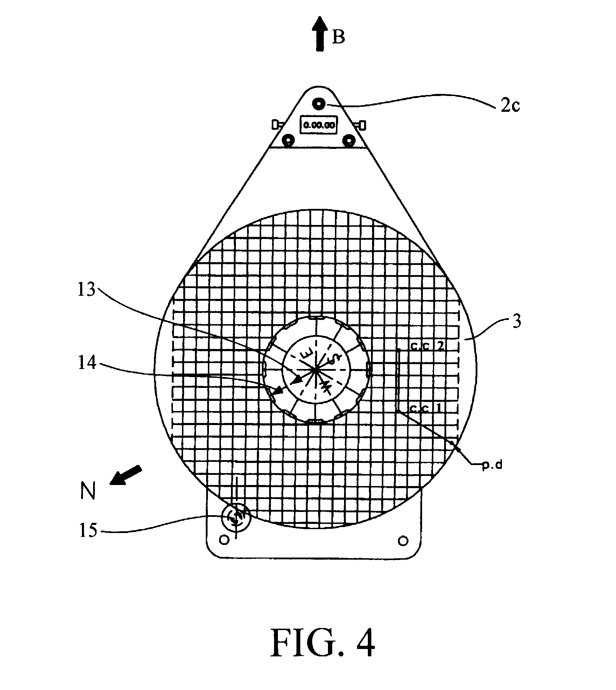

En référence à la figure 4, l'utilisateur choisit une nouvelle direction indiquée par la flèche B. Il aligne la pointe 2c de la zone triangulaire 2b avec cette direction B puis desserre ensuite le bouton de blocage 15 de manière à pouvoir tourner le plateau 3 et à aligner le repère du nord 14 de la couronne 4b avec l'aiguille indiquant le nord 13. Pour un changement de direction à droite, le plateau 3 doit être tourné dans le sens trigonométrique. Pour un changement de direction à gauche, le plateau 3 doit être tourné dans le sens horaire. L'utilisateur effectue alors son déplacement à vitesse constante suivant le cap B indiqué et chronomètre son déplacement à l'aide du chronomètre 5. Ensuite le chronomètre 5 est arrêté avant tout changement de direction. L'utilisateur trace alors sur le plateau 3 son déplacement en fonction de la durée du parcours en s'aidant du quadrillage 8, visible par transparence. Dans ce cas, 10 minutes de déplacement correspondent à 5 carreaux. Le point d'arrêt de la trajectoire correspond au deuxième changement de cap c.c 2, inscrit sur le plateau 3.

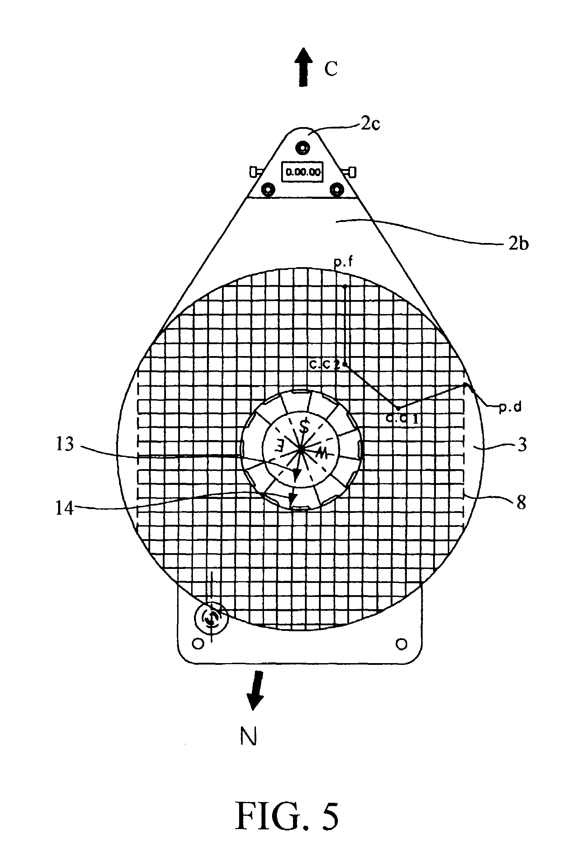

En référence à la figure 5, l'utilisateur choisit une nouvelle direction indiquée par la flèche C. Il aligne la pointe 2c de la zone triangulaire 2b avec cette direction C puis desserre ensuite le bouton de blocage 15 de manière à pouvoir tourner le plateau 3 et à aligner le repère du nord 14 de la couronne 4b avec l'aiguille indiquant le nord 13. L'utilisateur effectue alors son déplacement à vitesse constante suivant le cap C indiqué et chronomètre son déplacement à l'aide du chronomètre 5. Ensuite le chronomètre 5 est arrêté avant tout changement de direction. L'utilisateur trace alors sur le plateau 3 son déplacement en fonction de la durée du parcours en s'aidant du quadrillage 8, visible par transparence. Dans ce cas, 12 minutes de déplacement correspondent à 6 carreaux. Le point d'arrêt de la trajectoire correspond au point final du parcours p.f, inscrit sur le plateau 3.

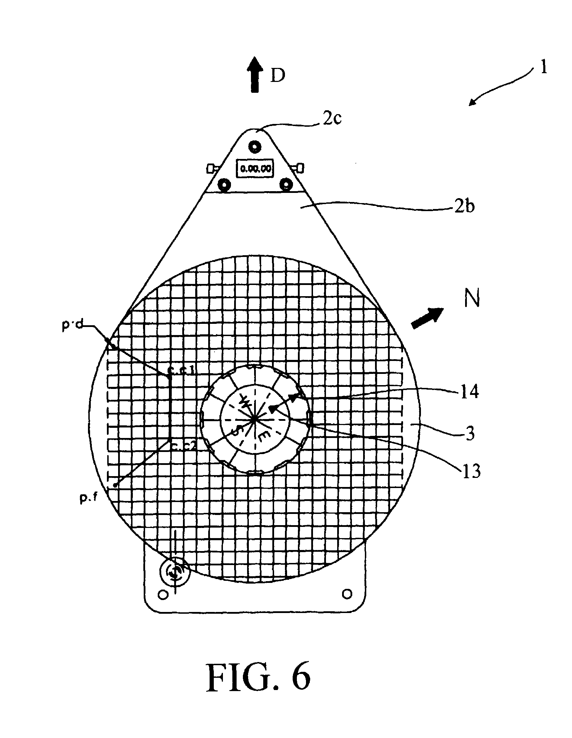

Pour revenir au point de départ, en référence à la figure 6, l'utilisateur tourne le plateau 3 de manière à aligner le point final p.f et le point de départ p.d avec une ligne verticale du quadrillage 8. Il suffit ensuite de tourner la tablette d'orientation 1 de manière à aligner le repère du nord 14 de la couronne 4b avec l'aiguille indiquant le nord 13. Le cap indiqué par la pointe 2c de la zone triangulaire 2b correspond à la direction du retour selon la flèche D. Le nombre de carreaux séparant les points de départ p.d et final p.f donnent le temps nécessaire pour effectuer le déplacement du retour. Dans cet exemple, il faudra 10 carreaux, soit 20 minutes pour revenir au point de départ.

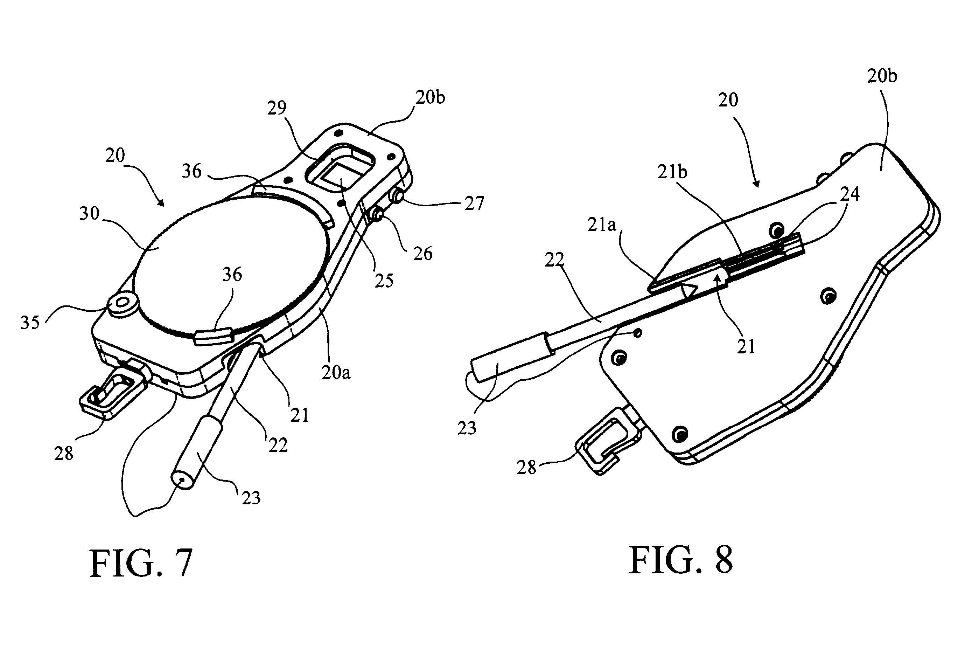

Les figures 7 et 8 représentent une variante de réalisation de la tablette selon l'invention. Dans ce cas, celle-ci comprend un support 20 en forme de boîtier, un plateau tournant 30 et une boussole (non représentée) dont la partie fixe est intégrée dans le boîtier.

Le support 20 présente une forme générale de poire avec une partie principale 20a ventrue et une zone arrière 20b plus étroite pour indiquer le cap suivi. Dans la zone arrière 20b se trouve un logement 29 pour recevoir un chronomètre 25 équipé d'un bouton de marche/arrêt 26 et d'un bouton de remise à zéro 27. Comme dans la réalisation précédente, un quadrillage (non représenté) est dessiné sur la partie du support 20 qui se trouve sous le plateau tournant 30. Le quadrillage, le plateau tournant et la boussole sont agencés de la même manière que décrit ci-dessus.

Le plateau tournant est maintenu par un bouton de blocage 35 et guidé en rotation par des rails 36 prévus sur le support 20.

Sous le support 20 est prévu un logement 21 pour recevoir un crayon de marquage 22 pourvu à son extrémité d'un support de crayon 23. Le logement 21 présente une première zone 2 la dont la largeur est choisie pour assurer le maintien du support de crayon 23 puis une seconde zone plus étroite 21b dont la largeur est choisie pour assurer le maintien du crayon 22 et partiellement fermée par deux lamelles élastiques 24. Ainsi, lorsque l'utilisateur se déplace, il peut ranger le crayon 23 dans son logement 21 pour avoir les mains libres.

Le support 20 est également pourvu, à son extrémité opposée à la zone 20b, d'un dispositif à enroulement automatique 28 pour la fixation d'un lien d'accrochage (non représenté). Ce dispositif 28 permet de régler la longueur du lien d'accrochage pour que la tablette soit le plus près possible de son point d'attache et éviter qu'elle se balance.

La description ci-dessus montre clairement que tous les buts de la présente invention sont atteints. La tablette d'orientation selon l'invention permet à toute personne se déplaçant à vitesse constante d'effectuer un parcours tout en s'orientant, sans avoir à utiliser de carte pour se repérer, et de pouvoir à tout moment retrouver son point de départ et connaître le temps approximatif nécessaire pour rejoindre ce dernier. La présente invention n'est pas limitée à l'exemple de réalisation décrit mais s'étend à toute modification et variante évidente pour un homme du métier. Notamment, les proportions et la forme des différents éléments ne sont pas limitées à celles représentées sur les dessins.

## Revendications

1. Tablette d'orientation (1) comprenant un support (2, 20) agencé pour indiquer le cap suivi, un plateau (3, 30) monté tournant autour de son axe (10) sur ledit support (2, 20), une boussole dont la partie fixe (4a) renfermant l'aiguille aimantée indiquant le nord (13) est fixée sur le support (2, 20), l'axe de la boussole étant confondu avec l'axe (10) du plateau tournant (3, 30), et des moyens de marquage (22), caractérisée en ce que la partie mobile (4b) de la boussole est fixée sur le plateau tournant (3, 30), en ce que ladite tablette (1) est pourvue d'un appareil de mesure du temps (5, 25) pour mesurer le temps écoulé pendant le trajet effectué selon le cap suivi, et en ce qu'un quadrillage (8) dont chaque carreau correspond à une unité de temps est imprimé directement sur le support (2, 20), de manière à représenter sur le plateau tournant (3, 30), en fonction du temps écoulé, la trajectoire effectuée selon le cap suivi à partir d'un point de départ pour retrouver le point de départ et connaître le temps nécessaire pour rejoindre ledit point de départ.

2. Tablette selon la revendication 1, caractérisée en ce qu'elle présente une zone (2b, 20b) dont la forme est agencée pour indiquer le cap suivi.

3. Tablette selon la revendication 2, caractérisée en ce que ladite zone est de forme triangulaire (2b), la pointe (2c) du triangle indiquant le cap suivi.

4. Tablette selon la revendication 3, caractérisée en ce que le quadrillage (8) est aligné avec la pointe (2c) du triangle.

5. Tablette selon la revendication 2, caractérisée en ce que l'appareil de mesure du temps est un chronomètre (5, 25) et en ce que ladite zone indiquant le cap (2b, 20b) comprend un logement (9, 29) pour recevoir ledit chronomètre (5, 25).

6. Tablette selon l'une quelconque des revendications précédentes, caractérisée en ce que le support (2, 20) comprend un bouton de blocage (15, 35) du plateau tournant (3, 30).

7. Tablette selon l'une quelconque des revendications précédentes, caractérisée en ce que le plateau tournant (3, 30) est réalisé dans un matériau transparent.

8. Tablette selon la revendication 1, caractérisée en ce que les moyens de marquage sont constitués d'un crayon gras (22).

9. Tablette selon la revendication 8, caractérisée en ce que le support (20) comporte un logement (21) pour le rangement dudit crayon gras (22).

10. Tablette selon l'une quelconque des revendications précédentes, caractérisée en ce qu'elle comprend des moyens de fixation (18, 28) pour un lien d'accrochage.
